Europäisches Patentamt

European Patent Office

Office européen des brevets

(19)

(11)  **EP 1 144 332 B1**

(12)  **EUROPÄISCHE PATENTSCHRIFT**

(45)  Veröffentlichungstag und Bekanntmachung des
Hinweises auf die Patenterteilung:
**22.10.2003  Patentblatt 2003/43**

(21)  Anmeldenummer: **99968309.7**

(22)  Anmeldetag: **15.12.1999**

(51)  Int Cl.[7]: **C04B 26/32**, C04B 41/49,
C08K 3/00, C09D 183/04,
C04B 26/00, C04B 41/46

(86)  Internationale Anmeldenummer:
**PCT/DE99/04036**

(87)  Internationale Veröffentlichungsnummer:
**WO 00/039049 (06.07.2000 Gazette 2000/27)**

(54)  **FORM- ODER BESCHICHTUNGSMATERIAL UND DESSEN VERWENDUNG**

FORMING OR COATING MATERIAL AND UTILISATION THEREOF

MATERIAU DE FA ONNAGE OU DE REVETEMENT ET SON UTILISATION

(84)  Benannte Vertragsstaaten:
**AT BE CH CY DE DK ES FI FR GB GR IE IT LI LU
MC NL PT SE**

(30)  Priorität: **24.12.1998  DE 19860161
12.05.1999  DE 19921876**

(43)  Veröffentlichungstag der Anmeldung:
**17.10.2001  Patentblatt 2001/42**

(73)  Patentinhaber: **Sto AG
79780 Stühlingen (DE)**

(72)  Erfinder:
• **BORN, Andrea
D-65627 Elbtal 2 (DE)**
• **WINK, Reinhardt
D-65239 Hochheim (DE)**
• **ERMUTH, Josef
D-65187 Wiesbaden (DE)**

(74)  Vertreter: **Weber, Dieter, Dr. et al
Weber, Seiffert, Lieke
Taunusstrasse 5a
65183 Wiesbaden (DE)**

(56)  Entgegenhaltungen:
**EP-A- 0 241 158          EP-A- 0 382 188
EP-A- 0 546 421          WO-A-97/10185
DE-A- 3 826 183          US-A- 5 700 853**

**Beschreibung**

Die Erfindung betrifft ein Form- oder Beschichtungsmaterial gemäß Anspruch 1, insbesondere für mineralische Untergründe, wie für Bauwerksfassaden. Es besteht aus einer vorzugsweise wäßrigen Dispersion von Bindemittel, das wenigstens ein hydrophobes Harz, Harzvorprodukt und/oder Wachs und wenigstens ein zusätzliches aushärtendes organisches und/oder hydraulisches Bindemittel einschließt, gegebenenfalls hydrophobiertem Füllstoff und gegebenenfalls üblichen, gegebenenfalls hydrophobierten Additiven.

Beschichtungsstoffe mit diesen Bestandteilen sind beispielsweise als Siliconharzfarben bekannt, die auch für das Beschichten von Bauwerksfassaden verwendet werden. Solche bekannten Beschichtungsstoffe haben aber den Nachteil, daß ihre volle Hydrophobie sich erst nach zwei- bis dreijähriger Bewitterung entwickelt, wenn im Trockenfilm enthaltene wasserlösliche Bestandteile vom Regen ausgewaschen worden sind. Dies führt dazu, daß in der Anfangsphase eine erhöhte Verschmutzung auftreten kann, insbesondere nach langen Trockenperioden, nach denen sich große Mengen von Schmutzpartikeln und Schadstoffen in der Atmosphäre befinden und von Niederschlagswasser aufgenommen werden. Die Schmutzpartikel lagern sich auf benetzbaren Oberflächen ab und führen einerseits zu einer Beeinträchtigung des Aussehens der Fassaden und anderen verschmutzten Flächen und andererseits zu einem korrodierenden Angriff auf den Oberflächen, auf denen sie abgelagert sind.

W. Schultze "Wäßrige Siliconharz-Beschichtungssysteme für Fassaden", Band 522 von Kontakt & Studium, 1997, Expert-Verlag, S. 435, zeigt in Bild 6.2.21 die Abhängigkeit der Kontaktwinkel verschiedener Fassadenfarben vom Bewitterungszeitraum. Bei allen untersuchten Fassadenfarben einschließlich Siliconharzfarben lag der Anfangskontaktwinkel unter 110° und erreichte ein Maximum erst nach längerer Zeit Schnellbewitterung unter verschärften Bedingungen.

Die EP-A-0 546 421 beschreibt Anstrichmittel und Putze mit hoher Frühwasserbeständigkeit, d.h. ohne anfängliche Auswaschperiode nach ihrer Applikation. Sie enthalten Silicone, organisches Polymer und Füllstoffe mit bimodaler Teilchengrößenverteilung, aber einen statischen Anfangskontaktwinkel wesentlich unter 130°.

Die EP-A-0 382 188 betrifft wärmeleitfähige Organosiloxanzusammensetzungen mit einem Gehalt an wärmeleitfähigem Aluminiumnitrid und wenigstens einem weiteren wärmeleitfähigen Füllstoff. Die US-A-5,700,853 beschreibt einen Siliconhautschutz, der in hoher Dichte mit Kieselsäure-Füllstoff vermischt werden kann und dennoch hohe Fließfähigkeit behält. Schließlich betrifft die EP-A-0 241 158 ein Beschichtungsmaterial für Instrumente, wie Antennen an Raumstationen, zum Schutz gegen Temperaturanstieg mit dessen Folgen. Diese Materialien enthalten Glimmer, Titandioxid und Ceroxid in Silicon. Alle diese zuletzt genannten Materialien enthalten kein organischen und/oder hydraulisches Bindemittel.

Das Reinigen von Fassaden und anderen Bauwerksflächen, wie Lichtkuppeln, Sonnenkollektoren, Dächern und Fassadenverzierungen, ist oft schwierig und kostspielig, da für eine solche Reinigung die Bauwerke häufig eingerüstet werden müssen. Bei Lichtkuppeln, Glasdächern usw. kommt zu den obengeschilderten Nachteilen noch der allmähliche Verlust der Lichtdurchlässigkeit hinzu, der von Zeit zu Zeit eine Reinigungsbehandlung unerläßlich macht.

Die der Erfindung zugrundeliegende Aufgabe bestand daher darin, Form- oder Beschichtungsmaterialien, besonders Beschichtungsstoffe zur Erzeugung selbstreinigender Formlinge oder Beschichtungen, z. B. auf Fassaden und anderen Bauwerkselementen zu bekommen, die sich, wenn sie von Zeit zu Zeit Regen oder bewegtem Wasser ausgesetzt sind, selbst reinigen und ein dauerhaftes Absetzen von Schmutzpartikeln und Schadstoffen vermeiden.

Erfindungsgemäß wird diese Aufgabe mit Form- oder Beschichtungsmaterialien mit den eingangs genannten Merkmalen gelöst, die dadurch gekennzeichnet sind, daß der enthaltene Füllstoff eine wenigstens bimodale Teilchengrößenverteilung hat, wobei der eine Teilchengrößenbereich (A) einen mittleren Teilchendurchmesser von mindestens 5 μm besitzt und der andere Teilchengrößenbereich (B) einen mittleren Teilchendurchmesser von höchstens 3 μm besitzt und das Gewichtsverhältnis der Teilchen des ersteren Teilchengrößenbereiches (A) zu den Teilchen des letzteren Teilchengrößenbereiches (B) bei 0,01 : 1 bis 12 : 1 liegt, und die Bestandteile der Dispersion bezüglich ihrer hydrophilen Eigenschaften so ausgewählt sind, daß der statische Anfangskontaktwinkel nach 3 min Äquilibrieren größer als 130° ist.

Diese erfindungsgemäßen Zusammensetzungen bewirken, daß durch den angestrebten Selbstreinigungseffekt mit fließendem Wasser, wie Regen, in Berührung kommende Gegenstände länger sauber bleiben und daher, wenn überhaupt, in größeren Abständen eine Reinigungsbehandlung erfordern, da die Ablagerung von Schmutzpartikeln und Sporen sowie die Primär- und Sekundärkontamination mit Mikroorganismen vermieden wird. Die Materialien nach der Erfindung haben die Effekte, daß schmutziges Regenwasser von der Oberfläche eines Gegenstandes abläuft und daß auf der Oberfläche abgelegte Staubteilchen von den abrollenden Wassertropfen mitgenommen werden. Außerdem führen solche Zusammensetzungen als Beschichtungsstoffe, da sie durch Ablaufenlassen des Regenwassers permanent trockene Fassaden ergeben, zum Vermeiden von Feuchteschäden, insbesondere an Wetterseiten. Ein weiterer Effekt ist der, daß Mikroorganismen eine wichtige Lebensgrundlage, das Wasser, entzogen wird, so daß beispielsweise Fassaden und andere Bauwerksflächen auf natürliche Weise ohne Zugabe von Bioziden zu den Zusammensetzungen vor Befall mit Pilzen, Algen, Flechten usw. weitgehend geschützt werden.

Wenn hier von dem statischen Anfangskontaktwinkel die Rede ist, so handelt es sich dabei um den Konktaktwinkel nach 28 Tagen Trocknung bei 23 °C und 50 % relativer Luftfeuchtigkeit.

Die Bestimmung des Kontaktwinkels an der Dreiphasen-Berührungslinie zwischen Festkörper, Flüssigkeit und Gas kann mit dem Kontaktwinkelmeßgerät G1 der Firma Krüss erfolgen. Der zu prüfende Beschichtungsstoff wird auf ein Substrat aufgebracht und bei den angegebenen Bedingungen 28 Tage getrocknet. Mit einer Mikroliterspritze wird nun ein Tropfen destilliertes Wasser (ca. 20 µl) auf das Substrat aufgegeben und der Kontaktwinkel durch Ablesen an der Goniometerskala gemessen. Vom Aufbringen des Tropfens bis zur Messung wartet man drei Minuten, damit sich das System äquilibrieren kann. Auf jedem Prüfkörper werden jeweils fünf Tropfen an verschiedenen Stellen gemessen, so daß insgesamt fünfzehn Meßwerte pro Prüfsubstanz ermittelt werden.

Es ist von Bedeutung, daß für eine klare Definition der statische Anfangskontaktwinkel bestimmt wird, da sich dieser durch Bewitterung und Zunahme der Hydrophobie der Oberfläche mit der Zeit verändert, so daß keine vergleichbaren Werte erhalten werden, wenn man den Kontaktwinkel zu wesentlich unterschiedlichen Zeitpunkten bestimmt. Silikatfarben und Dispersionsfarben haben Anfangskontaktwinkel unter 90°, Siliconharzfarben unter 120° und liegen daher erheblich unter den erfindungsgemäß eingestellten Werten.

Die Einstellung des statischen Anfangskontaktwinkels kann mit Hilfe der qualitativen und quantitativen Auswahl der Bindemittel, der Füllstoffe und der Additive, ihres Gehaltes an hydrophilen Stoffen, wie Emulgatoren und Stabilisatoren, sowie durch Nachbehandlung der Additive, um sie wasserquellbar oder hydrophob zu machen, erfolgen.

Zweckmäßig haben die erfindungsgemäßen Form- oder Beschichtungsmaterialien als Beschichtung, nach der nachfolgenden Methode bestimmt, eine maximale Wasseraufnahme c < 10 Gew.-%, vorzugsweise < 7 Gew.-%, besonders < 5 Gew.-%, ganz besodners < 3 Gew.-%, vor allem < 2 Gew.-%. Zur Bestimmung der maximalen Wasseraufnahme wird der Beschichtungsstoff mit einem 200 µm Rakel auf eine Alufolie (Fläche ca. 8 x 14 cm) appliziert. Es werden jeweils drei Prüfkörper erstellt. Danach werden die Prüfkörper 28 Tage unter freier Luftzirkulation bei (23 ± 2) °C und (50 ± 5)% relativer Luftfeuchte getrocknet. Dann werden die Prüfkörper drei Zyklen mit folgenden Bedingungen unterworfen:

- 24 h in destilliertem Wasser von (23 ± 2)°C lagern;
- 24 h bei (50 ± 2)°C trocknen.

Die Probekörper werden anschließend mindestens 24 h, aber nicht länger als drei Tage, unter Normbedingungen [(23 ± 2)°C und (50 ± 5)% relativer Luftfeuchte] konditioniert. (Gesamter Trocknungs- und Konditionierungszyklus siehe EN ISO 7783-2 bzw. EN 1062 Teil 3).

Nach Abschluß der Trocknung und Konditionierung werden die Folien mit Beschichtung auf 0,1 mg ($m_1$) gewogen. Dann werden die Prüfkörper in ein Gefäß mit destilliertem Wasser gegeben. Nach Eintauchen während (24 ± 1) h werden die Prüfkörper aus dem Wasser entnommen, sämtliches Wasser auf der Oberfläche wird mit einem sauberen, trockenen Tuch oder Filterpapier entfernt, und die Prüfkörper werden dann auf 0,1 mg gewogen. Anschließend werden sie erneut eingetaucht und nach (24 ± 1) h oberflächlich abgetrocknet und erneut gewogen. Diese Vorgehensweise wird solange wiederholt, bis eine Massenkonstanz ($m_2$) eintritt.

Für jeden Prüfkörper wird die relative Masseänderung c nach folgender Gleichung als prozentualer Anteil von der Ausgangsmasse berechnet:

$$c = \frac{m_2 - m_1}{m_1} \cdot 100$$

Dabei sind:

$m_1$: Masse des Prüfkörpers nach der Konditionierung und vor dem Eintauchen, in Milligramm;

$m_2$: Konstante Masse des Prüfkörpers nach mehrmaligem Eintauchen, in Milligramm.

$c$: Relative Masseänderung als prozentualer Anteil von der Ausgangsmasse, in Prozent.

(Durchführung und Berechnung erfolgen in Anlehnung an EN ISO 62 "Bestimmung der Wasseraufnahme", Unterpunkte 6.2 und 7.1)

Die erfindungsgemäßen Zusammensetzungen können als Formmassen oder Beschichtungsstoffe je nach ihrer Zusammensetzung und Konsistenz verwendet werden. Aus Formmassen, die teigige oder pastöse Konsistenz haben können, können nach bekannten Formverfahren, wie durch Extrudieren aus einem Formmundstück, durch Spritzguß oder dergleichen, Formlinge hergestellt werden, die eine seibstreinigende Oberfläche besitzen. Der Begriff der Formmassen und Formlinge soll hier im weitesten Sinne verstanden werden und schließt daher beispielsweise Verfugungsmassen, z. B. zum Verfugen von Keramikfliesen, Putze, Mörtel und dergleichen ein. Bevorzugt werden die erfindungsgemäßen Zusammensetzungen als Beschichtungsstoffe hergestellt und verwendet, die auf sehr unterschiedlichen Einsatzgebieten verwendet und auf unterschiedlichen Untergründen, wie metallischen Untergründen, Kunststoffen, Metallen, Glas oder Holz, aufgebracht werden können.

Ein wesentliches Einsatzgebiet von Beschichtungsstoffen nach der Erfindung sind die Anstrichmittel oder Putze für Fassaden und andere Bauwerksteile. Beschichtungsstoffe können aber auch für viele andere Anwendungszwecke eingesetzt werden, wie für Gleitflächenbeschichtungen für Boote und Schiffe, als Gleitflächenbeschichtung für Skier, als Holzschutzlacke und -lasuren, als Beschichtungsstoffe für Kunststoff- und Aluminiumfenster, für Kunststoffverkleidungen an Fassaden, als Dachbeschichtungen, als Antigraffiti-Schutzanstriche, als Antihaftbeschichtungen für Container, Tanks und Rohrleitungen, als Korrosionsschutzlacke, Autolacke, Schwimmbadbeschichtungen, Fußbodenbeschichtungen, Beschichtungen für Leitplanken, Verkehrsschilder und als Straßenmarkierungsfarben. Dies sind selbstverständlich nur einige Anwendungsbeispiele, da die Zahl der möglichen Anwendungsgebiete unbegrenzt ist.

Die erfindungsgemäße Dispersion von Bindemittel, Füllstoff und gegebenenfalls üblichen Additiven ist vorzugsweise eine wäßrige Dispersion, kann aber auch eine Dispersion an organischem Lösemittel sein, wie im Falle von Lacken. Solche organischen Lösemittel können aliphatische oder aromatische Kohlenwasserstoffe, beispielsweise Toluol, Ester oder Ketone, sein, die als Lösemittel für Bindemittel und Lacke bekannt sind. Die Menge an zugesetztem Wasser oder organischem Lösemittel wird vom Fachmann je nach der beabsichtigen Anwendung ausgewählt. Fließfähige Anstrichmittel werden größere Flüssigkeitsmengen enthalten als teigartige Formmassen für die Herstellung von Formlingen oder Verfugungen.

Zweckmäßig umfaßt das enthaltene Bindemittel, jeweils bezogen auf das Gesamtgewicht des Feststoffanteils des Form- oder Beschichtungsmaterials, 0,2 bis 20 Gew.% des hydrophoben Harzes, Harzvorproduktes und/oder Wachses und 0,5 bis 40 Gew.% wenigstens eines zusätzlichen aushärtenden Bindemittels.

Vorzugsweise sind die verwendeten hydrophoben Harze oder Wachse zusätzlich oleophob. Die hydrophoben Harze oder Wachse, vorzugsweise Harze, sind zweckmäßig Siliconharze, die im Falle wäßriger Dispersionen in Wasser emulgierbar oder emulgiert sein müssen. Statt Siliconharzen kommen jedoch auch andere Harze in Betracht, wie Fluorpolymere. Die Harzvorprodukte können beispielsweise Silane und Siloxane sein, die zu Siliconharzen polymerisieren. Wesentlich ist, daß diese Harze hydrophob sind. Wachse sind von Hause aus hydrophob und können daher im Regelfall als Anteil des hydrophoben Bindemittels eingesetzt werden.

Die zusätzlich aushärtenden Bindemittel können organischer oder anorganischer Natur sein. Beispiele organischer aushärtender Bindemittel sind Alkydharze, Polyvinylchlorid, Chlorkautschuk, Polyurethane und Epoxidharze. Beispiele anorganischer aushärtender Bindemittel sind hydraulische Bindemittel, wie Zement oder Kalk. Vorzugsweise verwendet man organische Polymere als zusätzliche aushärtende Bindemittel.

Die anorganischen oder organischen Füllstoffe mit wenigstens bimodaler Teilchengrößenverteilung, die gegebenenfalls hydrophobiert sein können, werden zweckmäßig so ausgewählt, daß die Teilchen des ersteren Teilchengrößenbereiches (A) einen mittleren Teilchendurchmesser im Bereich von 5 bis 100 μm, vorzugsweise im Bereich von 8 bis 40 μm, insbesondere im Bereich von 10 bis 40 μm, besonders von 10 bis 20 μm, haben. Die Teilchen des letzteren Teilchengrößenbereiches (B) haben vorzugsweise einen mittleren Teilchendurchmesser von höchstens 0,1 μm, vorzugsweise im Bereich von 0,1 bis 0,8 μm. Daneben können die Beschichtungsstoffe auch noch Füllstoffe anderer Teilchengrößenbereiche enthalten und damit eine mehr als bimodale, d. h. eine multimodale Teilchengrößenverteilung besitzen. Insbesondere im Falle von Putzen können zusätzliche Anteile groberer Körnungen vorhanden sein. Der mittlere Teilchendurchmesser errechnet sich aus der Summe der jeweils größten Teilchendurchmesser, geteilt durch die Anzahl der Teilchen.

Das Gewichtsverhältnis der Teilchen des ersten Teilchengrößenbereiches (A) zu den Teilchen des letzten Teilchengrößenbereiches (B) liegt vorzugsweise im Bereich von 0,3 : 1 bis 10 : 1, besonders im Bereich von 1,0 : 1 bis 2,5 : 1. Die Füllstoffe mit wenigstens bimodaler Teilchengrößenverteilung können ein einheitlicher Füllstoff unterschiedlicher Teilchengrößen oder Füllstoffgemische sein, insbesondere solche, denen der Teilchengrößenbereich (A) von einem Füllstoff und der Teilchengrößenbereich (B) von einem anderen Füllstoff gebildet wird. Selbstverständlich können dabei die Teilchengrößenbereiche (A) und (B) jeweils auch von mehreren unterschiedlichen Füllstoffarten gebildet werden. Die Füllstoffe können organischer oder anorganischer Natur sein, vorzugsweise anorganischer Natur. Der Füllstoff mit dem Teilchengrößenbereich (A) kann beispielsweise Siliciumdioxid, Calciumcarbonat oder Teflon sein. Der Füllstoff mit dem Teilchengrößenbereich (B) kann ebenfalls Siliciumdioxid oder auch beispielsweise Titanoxid sein. Es ist zweckmäßig, für den Teilchengrößenbereich (A) Cristobalit und für den Teilchengrößenbereich (B) Titanoxid, ein Buntpigment oder einen Füllstoff zu verwenden. Es können aber auch andere Füllstoffe eingesetzt werden. Als Quarzmehl wird zweckmäßig Cristobalit benutzt.

Das Bindemittel enthält zweckmäßig, jeweils bezogen auf den Feststoffanteil des Beschichtungsstoffes, vorzugsweise 1,5 bis 30, besonders 2 bis 15 Gew.%, ganz besonders bis 6 Gew.% zusätzliches aushärtendes Bindemittel und 1 bis 15, besonders 1,5 bis 4 Gew.% hydrophobes Harz, Harzvorprodukt oder Wachs, besonders Siliconharz, Silane, Siloxane oder Polysiloxane.

Wie bereits erwähnt, wählt man vorzugsweise Bindemittel aus, die einen möglichst geringen Anteil wasserlöslicher und/oder hydrophiler Stoffe, wie Emulgatoren und Stabilisatoren, enthalten. Zweckmäßig verwendete aushärtende Bindemittel sind Mischpolymerisate aus Acryl- und Methacrylsäureestem mit Styrol oder Ethylen-Vinyllaurat-Vinylchlorid. Andere brauchbare aushärtende Bindemittel sind reine Acrylate, Styrolacrylate sowie andere vorzugsweise verseifungsbeständige Polymerisate oder Mischpolymerisate. Die verwendbaren Siliconharze sind beispielsweise solche mit Alkyl- oder Alkoxygruppen, wobei sie vorzugsweise in Wasser emulgierbar oder emulgiert sind.

Die gegebenenfalls zugesetzten üblichen Additive können gegebenenfalls hydrophobiert sein und sind beispielsweise Verdickungsmittel, wie Polyurethanverdickungsmittel, Netzmittel und/oder Entschäumer, die jeweils zweckmäßig in kleinen Mengen, insbesondere in Mengen unter 2 Gew.% des Feststoffanteils des Beschichtungsmittels, zugegeben werden.

Durch die folgenden Beispiele wird die Erfindung weiter erläutert. Die folgenden Gewichtsprozentsätze der aufgeführten Komponenten wurden innig miteinander vermischt, worauf der statische Anfangskontaktwinkel nach drei Minuten in der obenbeschriebenen Weise bestimmt wurde.

**Beispiel 1** - Beschichtungsstoff (A)

| | |
|---|---|
| Wasser | 26,84 Gew.% |
| Natriumpolyacrylat als Netzmittel | 0,15 Gew.% |
| Polyurethan als Verdicker | 0,14 Gew.% |
| Polysaccharid als Verdicker | 0,20 Gew.% |
| Magnesium-Aluminiumhydrosilicat als Verdicker | 0,30 Gew.% |
| 2-Amino-2-methyl-1-propanol als Netzmittel | 0,50 Gew.% |
| Kombination von flüssigen Kohlenwasserstoffen, hydrophober Kieselsäure, synthetischen Copolymeren und nichtionogenen Emulgatoren als Entschäumer | 0,20 Gew.% |
| Copolymerisat auf Basis von Acryl- und Methacrylsäureestern sowie Styrol als Bindemittel | 12,00 Gew.% |
| Cristobalit ($d_{50}$ = 13 $\mu$m) als Füllstoff | 34,67 Gew.% |
| Titandioxid (d < 1 $\mu$m) als Füllstoff | 20,00 Gew.% |
| Polydimethylsiloxan mit Aminoalkylgruppen als Bindemittel | 1,00 Gew.% |
| Alkylalkoxysilan und -siloxan als Bindemittel | 4,00 Gew.% |
| Statischer Anfangskontaktwinkel nach 3 min | 140° |
| Maximale Wasseraufnahme des Beschichtungsstoff-Filmes | 1,1% |

**Beispiel 2** - Beschichtungsstoff B

| | |
|---|---|
| Wasser | 34,84 Gew.% |
| Natriumpolyacrylat als Netzmittel | 0,15 Gew.% |
| Polyurethan als Verdicker | 0,14 Gew.% |
| Polysaccharid als Verdicker | 0,20 Gew.% |
| Magnesium-Aluminiumhydrosilicat als Verdicker | 0,30 Gew.% |
| 2-Amino-2-methyl-1-propanol als Netzmittel 0,50 Gew.% Kombination von flüssigen Kohlenwasserstoffen, hydrophober Kieselsäure, synthetischen Copolymeren und nichtionogenen Emulgatoren als Entschäumer | 0,20 Gew.% |
| Ethylen-Vinyllaurat-Vinylchlorid-Terpolymer als Bindemittel | 4,00 Gew.% |
| Cristobalit ($d_{50}$ = 13 $\mu$m) als Füllstoff | 34,67 Gew.% |
| Titandioxid (d < 1 $\mu$m) als Füllstoff | 20,00 Gew.% |
| Polydimethylsiloxan mit Aminoalkylgruppen als Bindemittel | 1,00 Gew.% |
| Alkylalkoxysilan und -siloxan als Bindemittel | 4,00 Gew.% |
| Statischer Anfangskontaktwinkel nach 3 min | 137° |
| Maximale Wasseraufnahme des Beschichtungsstoff-Filmes | 3,4% |

**Beispiel 3 -** Betonbeschichtungsstoff

| | |
|---|---|
| Wasser | 31,10% |
| Natriumpolyacrylat als Netzmittel | 0,04 % |
| Polyurethan als Verdicker | 0,16 % |
| 2-Amino-2-methyl-1-propanol als Netzmittel | 0,50 % |
| Kombination von flüssigen Kohlenwasserstoffen, hydrophober Kieselsäure, synthetischen Copolymeren und nichtionogenen Emulgatoren als Entschäumer | 0,20 % |
| Cellulosefaser als Verdicker | 1,00 % |
| Copolymerisat auf Basis v on Acryl- und Methacrylsäureestem als Bindemittel | 12,00 % |
| Cristobalit ($d_{50}$ = 13μm) als Füllstoff | 30,00 % |
| Titandioxid (d < 1 μm) als Füllstoff | 20,00 % |
| Silan-Polydimethylsiloxan mit Aminoalkylgruppen als Bindemittel | 5,00 % |
| Statischer Anfangskontaktwinkel nach 3 min. | 135° |

**Beispiel 4** Putz

| | |
|---|---|
| Wasser | 15,27 % |
| Natriumpolyacrylat als Netzmittel | 0,03 % |
| 2-Amino-2-methyl-1-propanol als Netzmittel | 0,60 % |
| Kombination von flüssigen Kohlenwasserstoffen, hydrophober Kieselsäure, synthetischen Copolymeren und nichtionogenen Emulgatoren als Entschäumer | 0,20 % |
| Methylhydroxyethylcellulose als Verdicker | 0,05 % |
| Copolymerisat auf Basis von Acryl- und Methacrylsäureestern als Bindemittel | 4,80 % |
| Silisiumdioxid (($_{50}$ = 13 μm) als Füllstoff | 19,00 % |
| Siliciumdioxid ($d_{50}$ = 280 μm) als Füllstoff | 8,50 % |
| Titandioxid (d < 1 μm) als Füllstoff | 5,00 % |
| Silan-Polydimethylsiloxan mit Aminoalkylgruppen als Bindemittel | 4,50 % |
| Aluminiumhydroxid als Brandschutzmittel | 5,00 % |
| Magnesium - Schichtsilikat als Verdicker | 0,10 % |
| Aliphatisch/aromatisches Kohlenwasserstoffgemisch im Bereich C9 bis C12 als Filmbildehilfsmittel | 1,30 % |
| Tripropylenglykolmonomethylether als Filmbildehilfsmittel | 0,30 % |
| Fluorcarbonpolymer als Bindemittel | 0,30 % |
| Calciumcarbonat als Körnung | 35,00 % |
| Statischer Anfangskontaktwinkel nach 3 min. | 135° |

**Patentansprüche**

**1.** Form- oder Beschichtungsmaterial, bestehend aus einer Dispersion von Bindemittel, das wenigstens ein hydrophobes Harz, Harzvorprodukt und/oder Wachs und wenigstens ein zusätzliches aushärtendes organisches und/oder hydraulisches Bindemittel einschließt, Füllstoff und gegebenenfalls üblichen Additiven, **dadurch gekennzeichnet, daß** der enthaltene Füllstoff eine wenigstens bimodale Teilchengrößenverteilung hat, wobei der eine Teilchengrößenbereich (A) einen mittleren Teilchendurchmesser von mindestens 5 μm besitzt und der andere Teilchengrößenbereich (B) einen mittleren Teilchendurchmesser von höchstens 3 μm besitzt und das Gewichtsverhältnis der Teilchen des ersteren Teilchengrößenbereiches (A) zu den Teilchen des letzteren Teilchengrößenbereiches (B) bei 0,01 : 1 bis 12 : 1 liegt, und die Bestandteile der Dispersion bezüglich ihrer hydrophilen Eigenschaften so ausgewählt sind, **daß** der statische Anfangskontaktwinkel nach 3 min Äquilibrieren größer als 130° ist.

**2.** Form- oder Beschichtungsmaterial nach Anspruch 1, **dadurch gekennzeichnet, daß** das enthaltene Bindemittel, jeweils bezogen auf das Gesamtgewicht des Feststoffanteils des Form- oder Beschichtungsmaterials, 0,2 bis 20 Gew.% des hydrophoben Harzes, Harzvorproduktes und/oder Wachses und 0,5 bis 40 Gew.% wenigstens eines zusätzlichen aushärtenden Bindemittels umfaßt.

3. Form- oder Beschichtungsmittel nach Anspruch 1 oder 2, **dadurch gekennzeichnet, daß** es als Beschichtung eine maximale Wasseraufnahme c < 10 Gew.-%, vorzugsweise < 7 Gew.-%, besonders < 5 Gew.-% hat, ganz besodners < 3 Gew.-%, vor allem < 2 Gew.-% hat.

4. Form- oder Beschichtungsmaterial nach einem der Ansprüche 1 bis 3, **dadurch gekennzeichnet, daß** er ein Anstrichmittel oder Putz ist.

5. Form- oder Beschichtungsmaterial nach einem der Ansprüche 1 bis 4, **dadurch gekennzeichnet, daß** die Teilchen des ersteren Teilchengrößenbereiches (A) einen mittleren Durchmesser im Bereich von 5 bis 100 μm, vorzugsweise im Bereich von 8 bis 60 μm, insbesondere im Bereich von 10 bis 40 μm haben.

6. Form- oder Beschichtungsmaterial nach einem der Ansprüche 1 bis 5, **dadurch gekennzeichnet, daß** die Teilchen des letzteren Teilchengrößenbereiches (B) einen mittleren Teilchendurchmesser von höchstens 1 μm, vorzugsweise im Bereich von 0,1 bis 0,8 μm haben.

7. Form- oder Beschichtungsmaterial nach einem der Ansprüche 1 bis 6, **dadurch gekennzeichnet, daß** das Gewichtsverhältnis der Teilchen des ersten Teilchengrößenbereiches (A) zu den Teilchen des letzten Teilchengrößenbereiches (B) im Bereich von 0,3 : 1 bis 10 : 1, vorzugsweise im Bereich von 1,0 : 1 bis 2,5 : 1 liegt.

8. Form- oder Beschichtungsmaterial nach einem der Ansprüche 1 bis 7, **dadurch gekennzeichnet, daß** das Bindemittel 1,5 bis 30, vorzugsweise 2 bis 15 Gew.% zusätzliches aushärtendes Bindemittel, bezogen auf das Gesamtgewicht des Feststoffanteils des Beschichtungsstoffes, enthält.

9. Form- oder Beschichtungsmaterial nach einem der Ansprüche 1 bis 8, **dadurch gekennzeichnet, daß** das Bindemittel 1 bis 15, vorzugsweise 1,5 bis 4 Gew.% Siliconharz, bezogen auf das Gesamtgewicht des Feststoffanteils des Beschichtungsstoffes, enthält.

10. Form- oder Beschichtungsmaterial nach einem der Ansprüche 1 bis 9, **dadurch gekennzeichnet, daß** der enthaltene Füllstoff wenigstens zwei verschiedene anorganische Stoffe enthält, von denen einer die Teilchen des Teilchengrößenbereiches (A) und der andere die Teilchen des Teilchengrößenbereiches (B) bildet.

11. Form- oder Beschichtungsmaterial nach Anspruch 10, **dadurch gekennzeichnet, daß** die Teilchen des Teilchengrößenbereiches (A) aus Cristobalit und die Teilchen des Teilchengrößenbereiches (B) aus Titandioxid bestehen.

12. Form- oder Beschichtungsmaterial nach einem der Ansprüche 1 bis 11, **dadurch gekennzeichnet, daß** er als übliche Additive Verdicker, Netzmittel, organische oder anorganische Faserstoffe und/oder Entschäumer enthält.

13. Verwendung eines Beschichtungsstoffes nach einem der Ansprüche 1 bis 12 zur Beschichtung von Fassaden und anderen Bauwerksteilen.

**Claims**

1. A forming or coating material consisting of a dispersion of binder including at least one hydrophobic resin, resin precursor and/or wax and at least one additional curing organic and/or hydraulic binder, filler and optionally usual additives, **characterized in that** the contained filler has an at least bimodal particle size distribution, whereby the one particle size region (A) has an average particle diameter of at least 5 μm and the other particle size region (B) has an average particle diameter of at most 3 μm and the weight ratio of the particles of the former particle size region (A) to the particles of the latter particle size region (B) is 0,01 : 1 to 12 : 1 and the components of the dispersion are elected relating to their hydrophilic characteristics, so that the static outset contact angle after 3 min equilibration is bigger than 130°.

2. A forming or coating material according to claim 1, **characterized in that** the contained binder comprises, each referring to the total weight of the solid proportion of the forming or coating material, 0,2 to 20% by weight of the hydrophobic resin, resin precursor and/or wax, and 0,5 to 40% by weight of at least one additional curing binder.

3. A forming or coating material according to claim 1 or 2, **characterized in that** it has as coating a maximum taking up c < 10% by weight of water, preferably < 7% by weight, especially < 5% by weight, more especially < 3% by weight, most preferably < 2% by weight.

4. A forming or coating material according to one of the claims 1 to 3, **characterized in that** it is a painting or plaster.

5. A forming or coating material according to one of the claims 1 to 4, **characterized in that** the particles of the first particle size region (A) have a mean diameter in the range of from 5 to 100 µm, preferably in the range of from 8 to 60 µm, especially in the range of from 10 to 40 µm.

6. A forming or coating material according to one of the claims 1 to 5, **characterized in that** the particles of the latter particle size region (B) have a mean particle diameter of at most 1 µm, preferably in the range of from 0,1 to 0,8 µm.

7. A forming or coating material according to one of the claims 1 to 6, **characterized in that** the weight ratio of the particles of the first particle size region (A) to the particles of the last particle size region (B) is within the range of from 0,3 : 1 to 10 : 1, preferably in the range of from 1,0: 1 to 2,5 : 1.

8. A forming or coating material according to one of the claims 1 to 7, **characterized in that** the binder contains 1,5 to 30, preferably 2 to 15% by weight of additional curing binder, referring to the total weight of the solid portion of the coating material.

9. A forming or coating material according to one of the claims 1 to 8, **characterized in that** the binder contains 1 to 15, preferably 1,5 to 4% by weight of silicone resin, referring to the total weight of the solid portion of the coating material.

10. A forming or coating material according to one of the claims 1 to 9, **characterized in that** the contained filler contains at least two different inorganic materials one of which forms the particles of the particle size region (A) and the other of which forms the particles of the particle size region (B).

11. A forming or coating material according to claim 10, **characterized in that** the particles of the particle size region (A) consist of cristobalite and the particles of the particle size region (B) consist of titanium dioxide.

12. A forming or coating material according to one of the claims 1 to 11, **characterized in that** it contains as usual additives a thickener, wetting agent, organic or inorganic fibre materials and/or defoaming agent.

13. Use of a coating material according to one of the claims 1 to 12 to coat fronts of a building and other parts of buildings.

**Revendications**

1. Matériau de moulage ou de revêtement, composé d'une dispersion de liant, qui englobe au moins une résine hydrophobe, un produit de base pour résine et/ou de la cire et au moins un liant organique et/ou hydraulique durcissable, supplémentaire, de matériau de charge et, le cas échéant, d'additifs usuels, **caractérisé en ce que** le matériau de charge contenu présente une répartition de grandeur de particule au moins bimodale, un domaine de grandeur de particule (A) présentant un diamètre moyen de particule d'au moins 5µm, et l'autre domaine de grandeur de particule (B) présentant un diamètre moyen de particules d'au plus 3µm, et le rapport de poids des particules du premier domaine de grandeur de particule (A) relativement aux particules du dernier domaine de grandeur de particule (B) allant de 0,01 : 1 à 12 : 1, et les constituants de la dispersion étant, quant à leurs propriétés hydrophiles, choisis de manière telle, que l'angle de contact initial statique, après trois minutes d'équilibrage, soit supérieur à 130°.

2. Matériau de moulage ou de revêtement selon la revendication 1, **caractérisé en ce que** le liant contenu comprend, respectivement rapporté au poids total de la teneur en substances solides du matériau de moulage ou de revêtement, 0,2 à 20 % en poids de la résine hydrophobe, du produit de base pour résine et/ou de la cire, et 0,5 à 40% en poids d'au moins un liant durcissable supplémentaire.

3. Matériau de moulage ou de revêtement selon la revendication 1 ou 2, **caractérisé en ce qu'**il présente en tant que revêtement, une absorption d'eau maximale c < 10% en poids, de préférence < 7 % en poids, notamment < 5 % en poids, plus particulièrement < 3 % en poids, et avant tout < 2 % en poids.

4.  Matériau de moulage ou de revêtement selon l'une des revendications 1 à 3, **caractérisé en ce qu'**il constitue une peinture ou un crépis de revêtement.

5.  Matériau de moulage ou de revêtement selon l'une des revendications 1 à 4, **caractérisé en ce que** les particules du premier domaine de grandeur de particule (A) présentent un diamètre moyen dans une plage de 5 à 100µm, de préférence dans une plage de 8 à 60µm, notamment dans une plage de 10 à 40µm.

6.  Matériau de moulage ou de revêtement selon l'une des revendications 1 à 5, **caractérisé en ce que** les particules du dernier domaine de grandeur de particules (B) présentent un diamètre moyen de particule d'au plus 1µm, de préférence dans une plage de 0,1 à 0,8µm.

7.  Matériau de moulage ou de revêtement selon l'une des revendications 1 à 6, **caractérisé en ce que** le rapport de poids des particules du premier domaine de grandeur de particule (A) relativement aux particules du dernier domaine de grandeur de particule (B), se situe dans une plage de 0,3 : 1 à 10 : 1, de préférence dans la plage de 1,0 : 1 à 2,5 : 1.

8.  Matériau de moulage ou de revêtement selon l'une des revendications 1 à 7, **caractérisé en ce que** le liant renferme 1,5 à 30, de préférence 2 à 15 % en poids de liant durcissable supplémentaire, relativement au poids total de la teneur de substances solides du matériau de revêtement.

9.  Matériau de moulage ou de revêtement selon l'une des revendications 1 à 8, **caractérisé en ce que** le liant renferme 1 à 15, de préférence 1,5 à 4 % en poids de résine silicone, relativement au poids total de la teneur en substances solides du matériau de revêtement.

10. Matériau de moulage ou de revêtement selon l'une des revendications 1 à 9, **caractérisé en ce que** le matériau de charge contenu renferme au moins deux substances inorganiques différentes, dont l'une constitue les particules du domaine de grandeur de particule (A), et l'autre les particules du domaine de grandeur de particule (B).

11. Matériau de moulage ou de revêtement selon la revendication 10, **caractérisé en ce que** les particules du domaine de grandeur de particule (A) sont constituées de cristobalite, et les particules du domaine de grandeur de particule (B) d'oxyde de titane.

12. Matériau de moulage ou de revêtement selon l'une des revendications 1 à 11, **caractérisé en ce qu'**il renferme en tant qu'additifs usuels, des épaississants, des agents de mouillage, des substances de fibres organiques ou inorganiques et/ou des agents anti-moussants.

13. Utilisation d'un matériau de moulage ou de revêtement selon l'une des revendications 1 à 12, pour le revêtement de façades ou d'autres parties de constructions.